Europäisches Patentamt

European Patent Office

Office européen des brevets

(19)

(11) Numéro de publication : **0 069 669**
**B1**

(12)     FASCICULE DE BREVET EUROPÉEN

(45) Date de publication du fascicule du brevet :
26.06.85

(51) Int. Cl.⁴ : **B 27 B 33/10, B 27 G 13/14**

(21) Numéro de dépôt : 82401259.5

(22) Date de dépôt : 05.07.82

(54) **Lame de scie à main et scie équipée de cette lame.**

(30) Priorité : 08.07.81 FR 8113414

(43) Date de publication de la demande :
12.01.83 Bulletin 83/02

(45) Mention de la délivrance du brevet :
26.06.85 Bulletin 85/26

(84) Etats contractants désignés :
AT BE CH DE GB IT LI LU NL SE

(56) Documents cités :
DE-C-    51 836
DE-C-    51 932
DE-C-   214 733
FR-A-  2 133 019

(73) Titulaire : **Adamo née Rozentvaic, Denise**
**24 Rue Renon**
**F-94300 Vincennes (FR)**

(72) Inventeur : **Adamo née Rozentvaic, Denise**
**24 Rue Renon**
**F-94300 Vincennes (FR)**

(74) Mandataire : **Moncheny, Michel et al**
**c/o Cabinet Lavoix 2 Place d'Estienne d'Orves**
**F-75441 Paris Cedex 09 (FR)**

EP 0 069 669 B1

## Description

La présente invention est relative aux lames de scie à main.

Dans le brevet DE-C-51 932 est décrit une lame de scie permettant de pratiquer une coupe définie par les deux côtés d'un angle. Suivant un mode de réalisation, cette lame de scie a une forme de cornière dont les deux ailes forment entre elles un angle correspondant à l'angle de l'entaille à obtenir. Cette lame ne permet cependant pas de réaliser des entailles dont la longueur dépasse la largeur maximale des ailes.

Le but de l'invention est de réaliser une lame de scie permettant de pratiquer, à partir du bord libre d'une pièce à scier, une coupe définie par les deux côtés d'un angle, en vue notamment de l'exécution d'entailles à mi-bois, ou à queue d'aronde.

La lame de scie suivant l'invention est caractérisée en ce qu'elle comporte deux segments d'extrémité de forme plane, qui sont respectivement un segment de guidage à bord d'attaque lisse et un segment de travail à bord d'attaque dentelé, les plans de ces segments faisant l'un avec l'autre un angle α égal à l'angle de la coupe à obtenir, ainsi qu'un segment intermédiaire ayant approximativement une forme en cornière dont les ailes, qui font entre elles un angle α, prolongent les plans des segments d'extrémité respectifs et ont des arêtes respectivement lisse avec une largeur d'aile décroissante en direction du segment d'extrémité de travail, et dentelée avec une largeur d'aile croissante suivant cette même direction.

Pour exécuter une coupe en forme d'angle aigu, droit ou obtus, au moyen d'une scie à main équipée de la lame qui vient d'être définie, on commence par former, à partir du bord de la pièce, une première incision rectiligne correspondant à l'un des côtés de l'angle, au moyen d'une scie traditionnelle ou du segment dentelé de la lame de scie suivant l'invention, puis on introduit le segment de guidage lisse jusqu'au fond de la première incision, ou incision d'entrée, après quoi on donne à la partie intermédiaire de petits mouvements alternatifs sous l'effet desquels l'aile dentelée à largeur croissante du segment intermédiaire amorce la deuxième incision, ou incision de fond, jusqu'à ce que l'amorce d'incision atteigne la dimension du segment dentelé de la lame, ce qui permet de poursuivre l'incision de fond sur la longueur voulue, le segment lisse et l'aile de cornière qui le prolonge restant constamment en arrière de la pièce à scier.

Pour l'exécution d'une entaille à mi-bois, ou à queue d'aronde, la première incision a été complétée au préalable par une autre incision pratiquée, elle aussi, à partir d'un bord libre de la pièce au moyen d'une scie traditionnelle, ou du segment dentelé de la scie suivant l'invention, auquel cas le sciage de l'incision de fond au moyen du segment dentelé se poursuit jusqu'à la rencontre avec le fond de cette autre incision. Le morceau de bois ainsi découpé se détache alors de lui-même.

Ces opérations peuvent être faites très facilement sans expérience particulière de la menuiserie.

L'invention a également pour objet une scie à main comportant une monture à deux branches entre lesquelles la lame est montée, caractérisée en ce que chacune des extrémités de la lame est fixée dans un tourillon engagé dans la branche de monture correspondante et prolongé extérieurement par une poignée de manœuvre. Cette disposition permet d'utiliser le segment dentelé de la lame pour exécuter l'incision d'entrée et, le cas échéant, l'incision complémentaire formée, comme l'incision d'entrée, à partir du bord libre de la pièce en plaçant initialement le plan du segment d'extrémité dentelé dans le plan de la monture, les poignées étant tournées de l'angle α dans le sens voulu, après achèvement de l'incision d'entrée et éventuellement de l'incision complémentaire partant du bord libre.

L'invention sera explicitée au cours de la description qui va suivre, en référence aux dessins annexés, dans lesquels :

la figure 1 est une vue en perspective d'une scie à main comportant une monture en bois ;

la figure 2 est une vue de dessus de la lame de scie avec coupe des branches de monture ;

la figure 3 est une vue en coupe suivant la ligne 3-3 de la figure 2 ;

les figures 4 à 7 sont des schémas illustrant une opération d'exécution d'une entaille à mi-bois au moyen de la scie des figures 1 et 2 ;

la figure 8 est une vue en coupe, analogue à la figure 3, d'une lame de scie pour l'exécution d'une entaille à queue d'aronde.

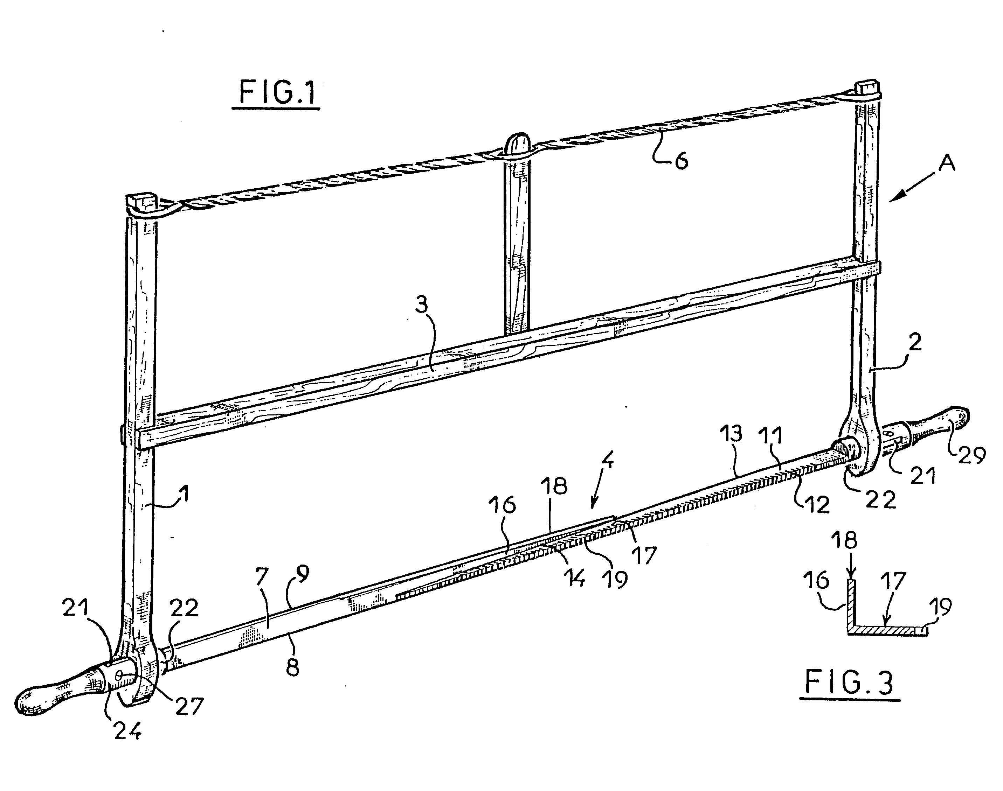

La scie de la figure 1 comporte une monture en bois dont la disposition d'ensemble est classique. Cette monture comporte essentiellement deux branches parallèles 1, 2 réunies à mi-longueur par une entretoise 3 et supportant, à l'une de leurs extrémités, une lame de scie 4 maintenue en tension par un tendeur 6 reliant les extrémités des branches opposées à la lame 4.

La lame 4 comporte, en position adjacente à la branche de monture 1, un segment d'extrémité 7 de forme plane, de largeur constante, et dont le bord d'attaque 8 est, comme le bord de fuite 9, lisse. Le plan de ce segment est, pour la position d'utilisation normale de la scie, situé dans le plan de la monture A.

En position adjacente à la branche 2 de la monture la lame 4 comporte un segment d'extrémité 11, également de forme plane, dont le plan fait avec le plan du segment d'extrémité 7 un angle droit, de sorte que ce segment est normalement orienté perpendiculairement au plan de la monture. Le bord d'attaque 12 de ce segment, qui est aussi de largeur constante, est dentelé, le bord de fuite 13 étant lisse.

Entre les segments d'extrémité 7 et 11 la lame comporte un segment intermédiaire de transition 14 ayant approximativement une forme en cornière (fig. 3) dont les ailes planes 16 et 17 prolongent respectivement le segment d'extrémité 7 à bord d'attaque lisse, et le segment d'extrémité 11 à bord d'attaque dentelé. Corrélativement l'arête 18 prolongeant le bord lisse 9 de l'aile 16 est lisse, tandis que l'arête 19 de l'aile 17 prolongeant le bord d'attaque dentelé 12 est elle-même dentelée. De plus la largeur de l'aile 16 décroît vers l'extrémité de la lame portée par la branche de monture 2, en partant d'une valeur égale à celle du segment 8 jusqu'à une valeur nulle au point de naissance du segment 11, tandis que la largeur de l'aile 17 est croissante à partir d'une valeur nulle coïncidant avec l'extrémité du segment 8, qui est opposée à la branche de monture 1, jusqu'à une valeur égale à celle du segment 11.

Comme le montre plus clairement la figure 2, chaque extrémité de la lame de scie 4 est engagée dans une fente 21 qui est formée dans un tourillon 22 monté à contact glissant dans un alésage 23 de la branche de monture 1 ou 2 et s'étend, à l'extérieur de la branche, dans un prolongement cylindrique 24 du tourillon 22 ayant un plus grand diamètre que ce dernier, de manière à définir un épaulement 26 au contact de la face correspondante de la branche de monture. L'extrémité de la lame est fixée au moyen d'une vis 27 traversant la partie cylindrique 24 et un trou 28 prévu dans l'extrémité de la lame. La partie cylindrique 24 se termine, du côté opposé à la branche, sous la forme d'une poignée de manœuvre 29.

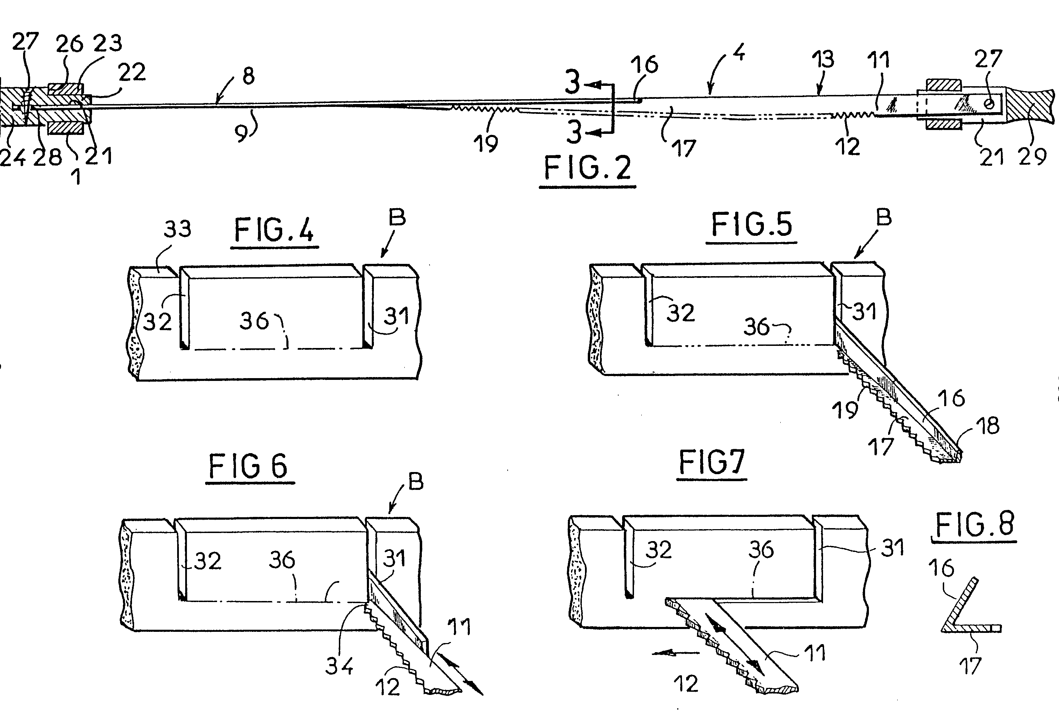

Les figures 4 à 7 illustrent le mode opératoire qui peut être adopté pour l'exécution d'une entaille à mi-bois dans une pièce de bois B.

Comme le montre la figure 4, deux incisions parallèles 31, 32, perpendiculaires au bord libre 33, sont exécutées initialement à partir du bord 33, au moyen soit d'une scie traditionnelle dont la lame forme un plan unique, soit du segment 11 à bord d'attaque dentelé de la lame 4, qui a été au préalable mise, par rotation des deux poignées 29, dans le plan de la monture A. Ces incisions sont évidemment exécutées jusqu'à une profondeur correspondant à celle de l'entaille à obtenir.

La lame de scie 4 étant disposée dans la monture suivant la position représentée aux figures 1 et 2, on introduit le segment lisse 7 jusqu'au fond de l'incision 31 considérée comme l'incision d'entrée. On amorce alors, en 34, le sciage de l'incision de fond 36 en imprimant de petits mouvements d'avant en arrière à la lame de scie 4 en engageant progressivement le segment intermédiaire 14 dans la pièce de bois B (fig. 6). Au cours de ces mouvements la lame est guidée par l'aile 16 du segment intermédiaire 14 qui glisse alternativement dans l'incision d'entrée 31. Au moment où l'amorce d'incision 34 correspond à la largeur du segment d'extrémité 11 à bord dentelé 12 de la lame de scie 4, le sciage de l'incision 36 se poursuit sous le seul effet du segment 11, le segment intermédiaire 14 restant en arrière de la pièce B (fig. 7).

L'entaille à mi-bois est achevée au moment où l'action de sciage de l'arête 12 a suffisamment progressé pour que l'incision 32, parallèle à l'incision 31, soit atteinte. Le morceau de bois découpé tombe alors de lui-même. L'entaille se présente avec une bonne finition, sans exiger de reprise.

La figure 8 illustre la possibilité d'exécuter une entaille à queue d'aronde au moyen d'une lame de scie 4 dont le segment intermédiaire 14 comporte des ailes faisant entre elles un angle qui, au lieu d'être égal à 90°, est par exemple de 60°.

**Revendications**

1. Lame de scie à main, permettant de pratiquer, à partir du bord libre d'une pièce à scier, une coupe définie par les deux côtés d'un angle, caractérisée en ce qu'elle comporte deux segments d'extrémité de forme plane, qui sont respectivement un segment de guidage (7) à bord d'attaque (8) lisse et un segment de travail (11) à bord d'attaque (12) dentelé, les plans de ces segments faisant l'un avec l'autre un angle ($\alpha$) égal à l'angle de la coupe à obtenir, ainsi qu'un segment intermédiaire (14) ayant approximativement une forme en cornière dont les ailes (16, 17), qui font entre elles un angle ($\alpha$), prolongent les plans des segments d'extrémité respectifs et ont des arêtes (18) respectivement lisse avec une largeur d'aile (16) décroissante en direction du segment d'extrémité de travail (11), et dentelée (19) avec une largeur d'aile (17) croissante suivant cette même direction.

2. Lame de scie à main suivant la revendication 1, caractérisée en ce que les segments d'extrémité (7, 11) sont de largeur constante.

3. Lame de scie à main suivant la revendication 1, caractérisée en ce que pour l'exécution d'une entaille à mi-bois, l'angle ($\alpha$) est égal à 90°.

4. Lame de scie à main suivant la revendication 1, caractérisée en ce que pour l'exécution d'une entaille à queue d'aronde, l'angle ($\alpha$) est un angle aigu, égal par exemple à 60° environ.

5. Scie à main comportant une monture à deux branches entre lesquelles est montée la lame suivant l'une des revendications 1 à 4, caractérisée en ce que chacune des extrémités de la lame (4) est fixée dans un tourillon (22) engagé dans la branche de monture correspondante (1, 2) et prolongé extérieurement par une poignée de manœuvre (29).

**Claims**

1. A hand-saw blade for making a cut in a free edge of a workpiece to be sawn, said cut being defined by the two sides of an angle, characterised in that it comprises two planar end segments which are respectively a guiding segment (7) having a smooth leading edge (8) and an operative segment (11) having a toothed leading edge (12), the planes of these segments making between each other an angle (α) equal to the angle of the cut to be obtained, and an intermediate segment (14) having approximately and L-shaped section whose wings (16, 17), which make an angle (α) therebetween, extend the planes of the respective end segments and have respectively a smooth edge (18) with a width of the wing (16) which decreases in the direction of the end operative segment (11), and a toothed edge (19) with a width of the wing (17) which increases in said direction.

2. A hand-saw blade according to claim 1, characterised in that the end segments (7, 11) are of constant width.

3. A hand-saw blade according to claim 1, characterised in that, for cutting a halving groove, the angle (α) is equal to 90°.

4. A hand-saw blade according to claim 1, characterised in that, for cutting a dovetail groove, the angle (α) is an acute angle, for example equal to about 60°.

5. A hand-saw comprising a frame having two branches between which is mounted the blade according to one of the claims 1 to 4, characterised in that each of the end portions of the blades (4) is fixed in a journal (22) engaged in the corresponding frame branch (1, 2) and externally extended by an operating handle (29).

**Patentansprüche**

1. Handsägeblatt zur Ausführung eines bestimmten Schnitts entlang der beiden Seiten eines Winkels, ausgehend von der freien Kante eines zu bearbeitenden Werkstücks, dadurch gekennzeichnet, daß dieses zwei plane Endsegmente aufweist, welche ein Führungssegment (7) mit glatter Vorderkante (8) beziehungsweise ein Arbeitssegment (11) mit gezackter Vorderkante (12) bilden, wobei die Ebenen dieser Segmente miteinander einen Winkel (α) bilden, welcher dem angestrebten Schnittwinkel entspricht, sowie ein Zwischensegemnt (14) mit etwa der Form eines Winkeleisens, dessen Schenkel (16, 17), welche zwischen sich einen Winkel (α) einschließen, eine Verlängerung der jeweiligen Ebenen der Endsegmente darstellen und jeweils eine glatte Kante (18) aufweisen, wobei die Breite des Schenkels (16) in Richtung des endseitigen Arbeitssegments (11) abnimmt, sowie eine gezackte Kante (19) mit einer Schenkelbreite (17), welche in derselben Richtung zunimmt.

2. Handsägeblatt nach Anspruch 1, dadurch gekennzeichnet, daß die Endsegmente (7, 11) eine konstante Breite aufweisen.

3. Handsägeblatt nach Anspruch 1, dadurch gekennzeichnet, daß für einen einfachen Einschnitt der Winkel (α) 90° beträgt.

4. Handsägeblatt nach Anspruch 1, dadurch gekennzeichnet, daß für einen schwalbenschwanzförmigen Einschnitt der Winkel (α) ein spitzer Winkel, beispielsweise von etwa 60°, ist.

5. Handsäge, mit einem Rahmen mit zwei Armen, zwischen denen das Sägeblatt nach den Ansprüchen 1 bis 4 befestigt ist, dadurch gekennzeichnet, daß jedes der Enden des Sägeblatts (4) in einem Zapfen (22) befestigt ist, welcher in den entsprechenden Rahmenarm (1, 2) eingreift, und nach außen durch einen Bedienungsgriff (29) verlängert ist.

FIG.1

FIG.3

A

6

3

2

1

22

27

24

21

11

13

12

22

21

29

4

18

17

19

14

16

16

18

17

19

7

9

8

FIG.2

FIG.4   FIG.5

FIG 6   FIG7   FIG.8